Europäisches Patentamt

European Patent Office

Office européen des brevets

(19)

(11) Publication number: **0 050 698**

**A1**

(12) # EUROPEAN PATENT APPLICATION

(21) Application number: **80850198.5**

(22) Date of filing: **30.12.80**

(51) Int. Cl.³: **F 02 C 5/04**

(30) Priority: **29.10.80 CA 363514**

(43) Date of publication of application:
**05.05.82 Bulletin 82/18**

(84) Designated Contracting States:
**AT BE CH DE FR GB IT LI LU NL SE**

(71) Applicant: **Morris, Harold**
**6 Sherwood Dr.**
**St. John's New Foundland A1E 2X4(CA)**

(72) Inventor: **Morris, Harold**
**6 Sherwood Dr.**
**St. John's New Foundland A1E 2X4(CA)**

(74) Representative: **Kummelsten, Per-Arne**
**UPPSALA PATENTBYRA Box 9039**
**S-750 09 Uppsala(SE)**

(54) **Rotary prime mover.**

(57) A rotary prime mover (10) is provided herein including a flywheel block (50) having at least one pair of opposed jet reaction engines therein which, when operative, cause rotation of the flywheel. The novel engine includes a generally cylindrical casing (20), the casing including an axial air intake (27), an axial exhaust outlet (30) and bearing means (26) at each circular end thereof to support a longitudinally arranged shaft (51). A flywheel block (50) is mounted on the longitudinally arranged shaft (51) and is arranged intermediate the air intake (27) and the exhaust outlet (30), the longitudinal shaft (51) having a fuel inlet passage therein, preferably being a fuel passage (60) concentrically bored in a solid shaft (51). The flywheel block (50) includes at least two balanced, diametrically opposed, jet reaction engines (100) mounted therein at the circumferential edge thereof. Each jet reaction engine (100) includes an air inlet mouth (107), an elongated annular/cylindrical combustion chamber (108), a fuel infeed line (58), e.g., a bore (58) connected to the fuel inlet passage (59), e.g., the fuel passage bore (59), the fuel passage bore (59) including automatically activated valve means therein, e.g., a spring (81)-biased ball valve (8), and ignition means (110), e.g., a spark plug (110) or glow plug (110) for igniting fuel fed to the combustion chamber (108), and an exhaust outlet (118), the ignition means being operatively connected to a source of ignition power (41) through the casing. In this way, operation of the jet reaction engines (100) causes powered rotation of the flywheel block (50), so that power may be taken off the longitudinal shaft (51).

FIG. 2

Croydon Printing Company Ltd.

– 1 –

Title of the Invention

Rotary Prime Mover

Technical Field to Which the Invention Relates

This invention relates to a rotary prime mover or engine having generally cylindrical casing, the casing including an axial air intake, an axial exhaust outlet, the casing including, e.g., upper and lower identical portions, each provided with at least two air inlet ports covered by air filter means, at least two exhaust outlets, each connected to an associated exhaust pipe, frusto-conical air inlets leading from the air inlet ports to the inlet side of the casing, exhaust outlet ports leading from the exhaust side of the casing to the exhaust outlets, and bearing means at each circular end of the casing to support a longitudinally arranged shaft; a flywheel block mounted on the longitudinally arranged shaft and arranged intermediate the air inlet and the exhaust outlet, the longitudinal shaft having a fuel passage, the flywheel block including a balancing means thereon, the flywheel block being secured to the longitudinal shaft, the flywheel block including at least two balanced, diametrically-opposed jet reaction engines mounted therein at the circumferential edge thereof, each jet reaction engine including an air inlet mouth, a combustion chamber, a fuel infeed line connected to the fuel inlet passage of the longitudinal shaft, and ignition means for igniting fuel fed to the combustion chamber and an exhaust outlet; whereby operation of the jet reaction engines causes powered rotation of the flywheel block, so that power may be taken off the longitudinal shaft.

Relevant Background Art

Rotary engines, as distinguished from the more conventional reciprocating type engines, operate on the principle of the direct action or reaction of expanding gases upon a rotary element in a manner which causes it to turn. A major advantage of rotary engines over reciprocating type engines accrues from their inherent structural simplicity, whereby the noise, wear and complexity caused by the various moving parts of reciprocating engines, such as reciprocating valves, pistons, rocker arms, etc., are eliminated. A well-known type of rotary engine is the gas turbine, but gas turbines, in their present state of development, are incapable of producing useful output power except at extremely high speeds. This results in limited application as well as unusually severe design restrictions. A further disadvantage of the gas turbine is the difficulty with which its speed may be controlled. This general type of rotary prime mover is well known in the art.

One such prior art patent is Canadian Patent No. 508,948 issued January 11, 1955 to W.W. Mount which is directed to a reaction burner power generator. In general, in accordance with the invention described in that patent, a comparatively large power wheel was provided having a centrally disposed shaft adapted to turn at as high a peripheral speed as is practical. On the periphery of this wheel, a plurality of reaction power cells or jet thrust burners, which could be ram jet motors or rocket motors, were mounted.

Another such prior art patent is Olenger, United States Patent No. 3,145,533 patented August 25, 1964, which provided an improved rotary internal combustion engine. The rotary engine comprised a stator having an enclosed compartment within which a cylindrically shaped rotor structure could turn. The rotor structure included a number of combustion chambers each having an exhaust nozzle directed toward the rotor periphery at an angle such that exhaust gases from the nozzle developed a rotation-producing, thrust component. The combustion chambers were charged with a controllable combustible gas which was ignited intermittently to provide power and control at low engine speeds. The inner peripheral surface of the stator compartment included thrust reaction surfaces which gradually gave way to exhaust ports which extended from the inner compartment to the outer surface of the stator in the vicinity of each of the reaction surfaces. Means were provided to inject fuel into each combustion chamber and to ignite the fuel at the instant its respective exhaust nozzle is directed against one of the periodically disposed reaction surfaces. At ignition, the initial burning of the gases in the combustion chamber caused a pressure which propagated through the nozzle and against the reaction surfaces of the stator to induce rotation of the rotor element. As rotation continued and the gases in the combustion chamber became entirely burned, they were permitted to escape in increasing quantity through the variable opening to the exhaust port. This was alleged to result in a jet-type thrust in the rotor which enhanced the initial reaction effect.

Other prior art patents include:

Canadian Patent No. 117,440 issued March 23, 1909 to Charles Brent;

Canadian Patent No. 252,119 issued July 28, 1925 to Donald L. Sellman;

Canadian Patent No. 653,226 issued December 4, 1962 to J.M. Carswell;

Canadian Patent No. 967,300 issued May 13, 1975 to M. Esheli;

Kitchens, United States Patent No. 3,085,399 patented April 16, 1963;

Romoli, United States Patent No. 3,541,787 patented November 24, 1970; and

Myada, United States Patent No. 3,956,888 patented May 18, 1976, all directed to the rotary engine, and the following patents:

Canadian Patent No. 616,597 issued March 21, 1961 to H.L. Magill;

Canadian Patent No. 882,985 issued October 12, 1971 to R.C. Evans;

Adams, United States Patent No. 3,341,129 patented September 12, 1967;

De la Foutte et al, United States Patent No. 3,526,094 patented September 1, 1974; and

Ghougasion, United States Patent No. 3,533,239 patented October 13, 1970; all directed to the structure of the ram jet combustion chamber.

Assessment of the Background Art

Thus, internal combustion engines hitherto devised still have considerable drawbacks, in spite of the numerous studies and improvements made thereto. Rotary engines provided up to now incorporated many inconveniences, not overcome, of seal, high consumption, poor pickup, and wear of many parts. Turbine engines were found to be unsuitable for an application on conventional motor vehicles because of their cumbersomeness, consumption, necessity of sound and heat shielding parts, and the impossibility of going under certain minimum dimensions and power. Jet engines for motor vehicles provided other problems, e.g., high fuel consumption, noise, and high power output required for their starting. Both turbine and jet engines are not suitable for adaption to motor vehicles, due to the necessity of providing air compression devices and many shielding members with their attendant increase in weight, size and costs.

In spite of many prior art rotary jet engines, jet-thrust internal combustion engines, rotary internal combustion engines, mixed fluid turbines, reaction burner power generators, reaction turbines, rotary engines and jet reaction prime movers, there still exists the need to provide a simple such engine, having a minimum of moving parts, in which the rotary member, the jet reaction member and the stationary casing are so interrelated as to provide an ultimate efficient engine. Applicant thus proposes to provide an internal combustion engine which does not have the disadvantages of reciprocating combustion engines and which is simple to construct and operate. Applicant thus proposes to provide a rotary engine which will provide substantial amounts of controllable power at low as well as high speeds and which has other advantages as compared to known types of rotary engines.

Disclosure of the Invention as Claimed

This invention as claimed is thus intended to provide a solution to the problem of the prior art. It provides such solution by a rotary engine characterized in that (A) the combustion chamber is an elongated annular/cylindrical combustion chamber; (B) the fuel passage includes automatically activated valve means therein; and (C) the ignition means is operatively connected to a source of ignition power through the casing.

The invention is further characterized in that the automatically activated valve means comprises a spring biased ball vale.

The invention is further characterized in that the flywheel block includes a fuel inlet bore, the bore containing a valve means therein, the valve means comprising a spherical ball maintained in position by a compression biasing spring.

The invention is still further characterized in that it includes fan means to draw air into the casing and to expel exhaust gas from the casing.

The invention is yet further characterized in that it includes air flow guide means along the inner circumferential wall intermediate the air intake and the exhaust outlet, the air inflow guide means preferably being generally in the shaped of a fluted spiral groove, which is adapted to cooperate with the jet reaction engines to direct air to the air inlet mouth and to direct exhaust from the exhaust outlet to the baffled axial exhaust outlet.

The invention is still further characterized in that it includes air compressor fan means secured to the shaft for compressing intake air and for directing the air to the air flow guide means.

The invention is still further characterized in that the fuel inlet includes a fuel passage in the longitudinal shaft, and at least two fuel passages radially extending from the central shaft to an associated well within which an associated jet reaction engine is secured, the wells each having an axis parallel to the axis of the longitudinal shaft, the fuel inlet passage preferably including a small diameter bore leading to a larger diameter bore adjacent the jet reaction engine well, the larger diameter bore containing a ball valve means and a valve control compression spring.

The invention is yet further characterized in that jet reaction engine well includes a circumferential abutment ledge to retain the forward input end of the jet reaction engine.

The invention is still further characterized in that the electrical contact wiper comprises a slip ring within the casing, preferably wherein the slip ring is water cooled.

The invention is further characterized in that the jet reaction engine includes a tubular body, an ignition head adjustably secured at one end, the ignition head including a plurality of longitudinally extending air inlet passages, an exhaust liner adjustably secured at the other end, the exhaust liner including a central longitudinally extending exhaust passage, a cylindrical combustion zone, an annular infeed zone, and means for admitting fuel to the annular zone.

The invention is still further characterized in that it includes a disc-shaped reed valve at the air inlet passages to control the amount of air fed to the combustion zone.

The invention is yet further characterized in that it includes a hemi-toroidal base at the annular zone to assist in the desired infeed of fuel thereinto.

The invention is still further characterized in that the jet reaction tubular body includes a plurality of longitudinally-extending air cooling passages therethrough.

By another variant of the invention, the longitudinal shaft is solid and is concentrically bored to accommodate a fuel passage.

By another variant, the shaft is hollow and is provided with a fuel inlet passage.

By yet another variant, the casing includes upper and lower identical portions, each provided with at least two air inlet ports covered by air filter means, and at least two exhaust outlets, each connected to an associated exhaust pipe.

By still another variant, the exhaust pipes are connected to an exhaust manifold.

By yet another variant, the casing includes an outer housing and an inner heat-insulating casing, the casing including frusto-conical air inlets leading from the air inlet ports to the exhaust side of the casing, and exhaust outlet ports leading from the exhaust side of the casing to the exhaust outlets.

By still another variant, a space is provided between the outer housing and the inner casing, thereby to maintain sound output levels to a minimum and to reduce transfer of heat between the inner casing and the outer housing.

By another variant, insulating material is disposed between the outer housing and the inner casing, thereby further reducing transfer of heat and sound.

By yet a further variant, the flywheel block is in the shape of a central cylindrical portion and a pair of lateral, frusto-conical portions, with the flywheel block having balancing means thereon.

By other variants, the flywheel block may be secured to the longitudinal shaft by set screw means, or by keyway-and-spline means.

By yet a further variant, O-rings are included to provide a fuel seal between the longitudinal shaft and the flywheel block.

By other variants, the ignition means includes a spark plug or a glow plug connected by a whisker wiper electrode to an electrical contact wiper on the inner circumference of the casing.

Advantageous Effects of the Invention

The rotary engine proposed by this invention is relatively simple in construction; provides high output; provides smooth and efficient operation; involves relatively inexpensive components; is rugged in construction; is extremely economical in utilization of fuel; is relatively compact in size; has high capacity; is relatively light in weight in proprotion to the power rating thereof; is easy to assemble; and is provided with self-contained means for thoroughly and efficiently mixing the fuel and air admitted thereto to provide the proper combustible mixture for operating the engine.

Description of One Way of Carrying Out the Invention

One way of carrying out the invention is described in detail below with reference to drawings which illustrate only one specific embodiment, in which:

Figure 1 is a central longitudinal section through the prime mover of one embodiment of this invention in which the flywheel block, rotatably mounted within the casing, is shown in plan and with the upper portion of the casing removed for clarity;

Figure 2 is a central longitudinal section through the flywheel block shaft and ball valve assembly;

Figure 3 is an end view of the flywheel block used in an embodiment of this invention; and

Figure 4 is a central longitudinal section through a jet reaction engine providing one embodiment of this invention.

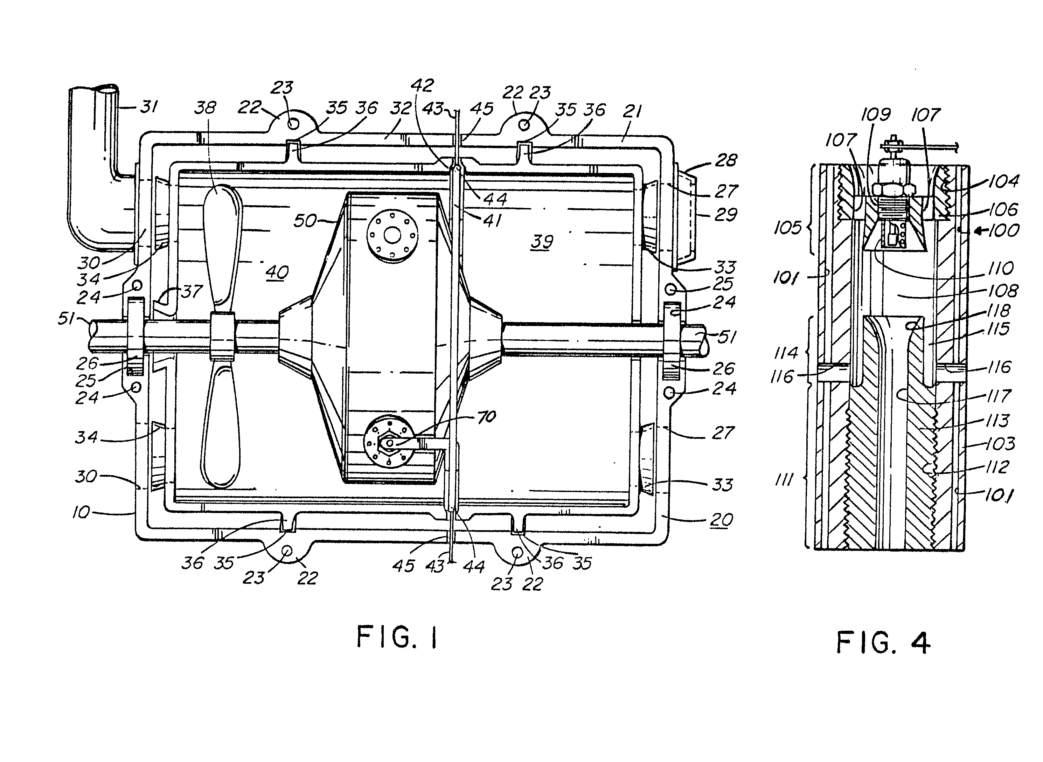

As seen in Figure 1, the rotary prime mover 10 includes a rotary flywheel block 50 rotatably mounted within a casing 20 by means of shaft 51. The construction of the rotary flywheel block 50 will be described later.

The housing 20 is preferably cast out of a suitable metal, e.g., iron, aluminium, magnesium, etc., and is formed of a lower half 21 (as seen) and an identical upper half (not seen). The halves are each provided with ears 22, having registering bolt holes 23 so that the two halves may be assembled. Additional registering bolt holes 24 are provided for further securing of the two halves and permit a more critical adjustment of the casing near the bearings. The top half would be shaped such that the perimeter of the junction of the two halves would form a lap joint that would secure against leaks and reduce manufacturing tolerances. The bottom half of the housing would have a means for mounting the entire housing 20 to the frame of the device it is to power (not shown). Since the top and bottom halves of the casing are identical, only the bottom half

· will be described now.

The housing 20 is provided with a pair of longitudinally opposed wells 25, along the central longitudinal axis thereof, to provide a seat for anti-friction bearings 26 that support shaft 51. The housing 20 includes a disc 29 of air filtering material. While each half of the housing 20 would contain two such filtering arrangements, only one is shown in its entirety in the drawing in order to simplify the drawing. The housing also includes a pair of exhaust outlets 30, which are connected in the usual manner, to a flanged exhaust pipe 31. While each half of the housing 20 contains two such exhaust arrangements, only one is shown in its entirety in the drawing in order to simplify the drawing. These exhaust pipes 31 may be arranged in manifold fashion to provide for the complete collection of exhaust gases by coupling to the other exhaust holes in the housing.

Within the housing 20 is an inner casing or lining 32. This lining 32 is also formed in two halves (as is the housing 20) but for ease of illustration only the bottom half is shown and will be described. The inner casing or lining 32 preferably is spaced from the housing 20 so as to accommodate insulation (if required) between it and the outside housing to maintain an acceptable temperature and sound level. It should be made of a suitable heat-resisting material with electrical and heat-insulating properties and should also be capable of efficiently directing the intake of air and the exhausting of the exhaust gases in the most effective manner. The inner casing is thus preferably made of molded asbestos or a suitable ceramic material, e.g., that known by the Trade Mark of CORNING WARE. One end of the lining 32 is provided with a pair of frusto-conically shaped intakes 33 to direct intake air from the air intake ports 27 into the casing 20. The other end of the lining 32 is provided with a pair of frusto-conically shaped outlets 34 to direct the exhaust gases from the interior of the casing 20 to the exhaust outlets 30.

In order to secure the inner casing or lining 32 to the housing 20, the metal housing 20 is provided with circumventing interior channels 35, which are sized snugly to accept ribs 36 that encircle the exterior of the casing 32 and are integral with it. The channel/rib arrangement is such that it provides support and alignment of the casing 32 with respect to the housing 20 while, at the same time making a minimum surface contact in the interest of low heat and sound transfer by conduction. Conically shaped protrusion 37, on the exhaust end of the casing 32, is located and shaped such that bearing 26 is protected from directed impingement by the exhaust gases. Air input and exhaust output may be caused and controlled by a fan 38 that is rigidly attached to shaft 51.

While the air inflow and exhaust outflow is shown to be provided and controlled by the fan 38, other or auxiliary means may be provided. Thus, multi-step compressor fan blades may be secured to the air intake region of shaft 51 to provide a feed of compressed air to the jet reaction motors (to be described later). Also the region of the casing diametrically opposite the jet reaction motors may be provided as an internal spiral channel leading from the air intake side 39 of the casing 32 to the exhaust side 40 of the casing 32. The obtaining of a suitable air mixture and the maintaining of satisfactory exhausting will determine the design and the use of one or two fans both in the exhaust side 40 and in the air intake side 39.

In order to provide contact ignition and for the spark plugs or glow plugs of the jet reaction motor, a circular slip-ring 41 consisting of a round or square tube or of plate-type form, and having a smooth surface is inset in the inner casing 32 in a channel 42 that is molded in the casing 32. This ignition slip-ring 41 is located away from the centre of the ram jet outputs to prevent or reduce undue temperature rise. If necessary, further control of slip-ring temperature may be obtained by inducing a steady flow of water or coolant through the slip-ring 41. This flow would be directed to enter and leave via pipes 43 that are fused to the slip-ring 41 at the terminal poles 44. Semi-circular openings 45 in the housing 20 provide access for pipes 43 and slip-ring 41.

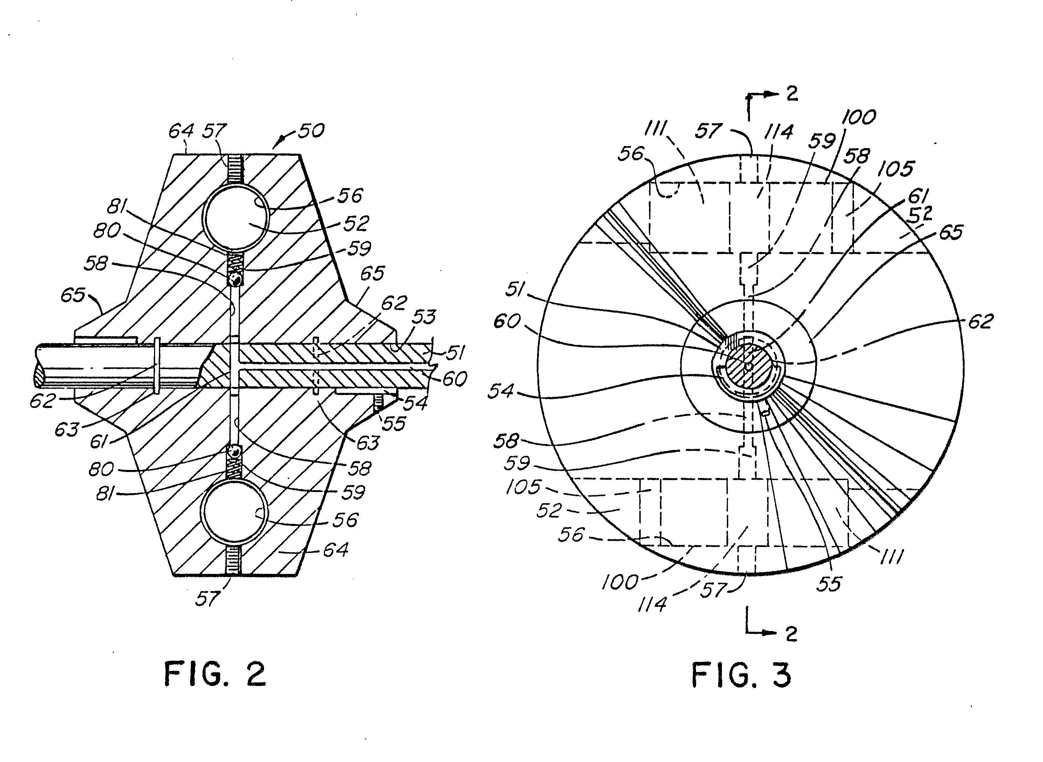

As stated before, the rotary flywheel block 50 is rotatably mounted within housing 20 by shaft 51 turning on anti-friction bearings 26. Now, as seen in Figure 2, the rotary flywheel block 50 is provided with a pair of diametrically opposed cylindrical wells 52 to contain housings 103 of jet reaction engines 100 (see Figure 4). A longitudinal bore 53 is provided snugly to embrace hollow shaft 51 which is secured to the flywheel block 50 by the use of keyway 54 and set screws 55 or a spline (not shown) on the power end so as not to interfere with the internal fuel feed system incorporated in the flywheel block 50. Each housing 103 is maintained in proper position within the flywheel block 50 by annular shoulders 56 and through use of set screws 57. The positional alignment of the housing 103 as described is necessary to ensure an undisturbed free passage of fuel between radial fuel bore 58 and larger radial fuel bore 59. With reference to Figure 2, a fuel bore 60 is provided through the centre of longitudinal shaft 51, fuel bore 60 being smaller in diameter and running along the longitudinal axis of the shaft 51. Fuel bore 60 meets a laterally made bore 61 in the shaft 51 to form essentially a T-junction. The lateral bore 61 is aligned with the coextensive axial fuel bores 58 and 59. Larger bore 59 contains ball 80 that is held under controlled pressure by compression spring 81. The spring 81 may be retained and made adjustable by a bored retaining part (not shown) that is threaded externally to mate with a threaded portion of bore 59. Other means may alternatively be used to serve the same purpose of retaining the ball valve mechanism. When the block 50 is stationary, compression spring 81 maintains ball 80 against bore 58 to prevent fuel flow into jet reaction motor 100. Under the centrifugal force of rotation, the ball 80 is urged partially to overcome the bias force of spring 81, thus permitting entry of fuel as required in relation to the rotary speed of the motor block 50. This provides a simple yet effective means of supplying fuel to jet reaction engine 100. Connected to bore 60 is a fuel feed line (not shown) which subsequently connects to a fuel container means having manually adjustable fuel flow valve that meters the rate at which the fuel is fed to the jet reaction engines. This determines and controls the rotary speed of the flywheel block 50 under given degrees of shaft loading and developed power output. O-rings 62 provide an effective fuel seal between longitudinal shaft 51 and flywheel block 50 and are arranged to fit in notches 63 in the flywheel block 50 and mating grooves in longitudinal shaft 51.

The flywheel block 50 is shaped like a central cylindrical portion 64, where bores 52 are provided, and lateral frusto-conical ends 65, which assist in the movement of intake air in intake end 39, and exhaust gases in exhaust end 40 (see Figure 1).

Turning now to the jet reaction motor 100 shown in Figure 4, cylindrically shaped housing 103 is internally threaded 104 on one end 105 to accommodate an ignition head 106. Ignition head 106 includes a main cylindrical body portion provided with appropriately sized and positioned longitudinally extending air intake passages 107 therethrough to permit entry to the combustion chamber 108 the air required for combustion of the fuel. The rate at which air enters through passages 107 is controlled by a disc-shaped metal reed valve (not shown), which is securely fastened to the inner (combustion chamber) end of the ignition head 106.

- 11-

The disc-shaped reed valve is constructed such that it will automatically flex under forces created by a decrease in pressure in the combustion chamber 108 in a manner suitable for the intake of the correct amount of air for a given fuel flow. The ignition head 106 is internally threaded at 109 to accept glow plug 110 or other similar ignition devices.

The opposite end 111 of the housing 103 is threaded 112, to accommodate an exhaust liner 113. The exhaust liner 113 is provided with a portion 114 of less diameter to provide, between it and the wall of housing 103, an annular fuel admission zone 115 leading to the combustion zone 108. The fuel is admitted by centrifugal force from the fuel bores 60, 59 and 58 to transverse fuel apertures 116 in the wall of the housing 103. The exhaust liner 113 is bored to provide an essentially longitudinal exhaust bore 117, with one end of the bore 117 flared as a wide throat 118 to permit undisturbed passage of exhaust gases during operation. The combustion is supported, and the temperature of the combustion chamber 108 is maintained within prescribed maximum limits by the flow of air through longitudinally extending cooling passages 106.

Further Advantageous Effects of the Invention

Thus, it is seen that there is now provided a simple, efficient rotary prime mover. The invention includes as essential features jet reaction engines which are contained in, and are functionally integral with, a flywheel block which is suitably supported such that the jet reaction engines cause the flywheel block to rotate on a shaft mounted in bearings. The shaft is arranged such that the energy developed by the jet reaction engine exhaust thrust can be coupled to provide low vibration motive power for vehicles or other devices that require energy.

The present invention is attractive for a wide variety of uses when compared with other well-known internal combustion engines. The location of the combustion chambers as jet reaction engines results in the full utilization of every part of each revolution of the engine insofar as the development of thrust is concerned. Inasmuch as the integral parts of the engine move in one rotary direction, without reciprocating motion, the resulting stresses on the parts of the engine are considerably reduced.

The structure provides a mechanical design that is simple and less expensive than conventional engines with comparable horsepower. The present rotary prime mover has a minimum number of moving parts. Those parts which provide the thrust to the rotary prime mover are essentially made into one part that does not itself move relative to the rotary flywheel. Only a rotary movement of a shaft with respect to bearings is provided. The advantages of fewer parts, and in particular fewer moving parts, include lower manufacturing costs and lower maintenance costs.

Without modification, the rotary prime mover is suitable for mounting and operating in any position and thereby permits power takeoff that is suitable for most requirements. Additionally, a common shaft and fuel feed system can readily be combined with more than one main engine unit to increase power output and further to reduce vibration from the combinational unit. The flywheel block of the rotary prime mover may be shaped in a form that would best take advantage of maintaining engine temperature within prescribed acceptable limits by virtue of the flow of air through and about the flywheel block and the housing or casing.

The jet reaction engine combined with the glow plug and centrifugal coaxial fuel feed arrangement permits the use of a variety of fuels that may be used with a minimum requirement for adjustment of the fuel feed system to compensate for a change in fuel type. Further, the utilization of the glow plug means of fuel ignition reduces the complexity of the ignition electrical requirement to that of a low voltage electrical power source that does not require modification to another voltage level in order to start and run the rotary prime mover. The fuel supply to the combustion chambers, fed by coaxial centrifugal force, is regulated by a simple fuel feed valve which, by nature of its simplicity, further reduces carburetor requirements and cost. The centrifugal force of the rotating flywheel block of the rotary prime mover acts on the fuel entering the jet combustion chamber. Such force thus causes the fuel to be injected into the jet chamber and prepares it for efficient combustion with the air entering the chamber from suitable openings in the ignition heads.

It is also clear that the rotary prime mover of aspects of this invention does not require lubricating oil in the sense that such oil is required by conventional internal combustion engines. The jet reaction engine and its exhaust gases provide thrust. The combustion thus does not result in relative mechanical movement between metal parts as in other engines. The shaft with the attached flywheel block and jet reaction engine assembly is mounted in bearings which are selected for operation under both radial and axial loads. These bearings preferably are permanently lubricated and sealed. Further, a malfunction of one jet reaction engine would not result in a termination of power outputs. While each jet

reaction engine operates cooperatively and compatibly under normal engine use, they nevertheless have an independence such that, should failure occur, the change in engine operation would be restricted solely to a lower power output under a given fuel supply rate.

The rotary engine proposed by this invention may be used in the place of conventional steam-electric generating installations. In such installations, only the heat transferred to the boiler water is utilized to produce usable power. In many conventional steam-electric generating plants, the overall efficiency, i.e., the ratio of the net power available externally of the plant to the theoretical power available from the input fuel, is relatively low as many losses are encountered in the conversion of steam to usable power. In such an installation an overall efficiency of 34% is an acceptable high figure, with many installations operating at an overall efficiency appreciably below this value. In such a system, using conventional fuel burners, the increase in volume of the combustion gases, due to burning alone, produces no useful work except, perhaps, to increase slightly the draft of the furnace.

This present invention provides a unitary power generator, peculiarly adapted to the generation of power in large installations, wherein the energy of motion obtained by utilizing the momentum forces set in motion by the combustion of fuel and air in ram jet motors, or by the combustion of fuel and oxidizer in rocket motors, is compounded with the energy obtained from the conversion of the high temperature exhaust from the jet motors into steam, to produce a total amount of usable power appreciably greater than that produced from an equivalent amount of fuel in a conventional power generation installation.

The reaction jet engines mounted within the periphery of the flywheel block will deliver great amounts of power at great peripheral speeds. The ram jet motors are designed to operate at a predetermined air intake speed.

When jet thrust burners burn fuel and a compressed mixture of fuel and oxidizer in a confined space, the increase in gas volume resulting from the combustion is utilized to develop reaction forces for the production of mechanical energy. The amount of heat utilized in producing thrust in the ram jet motors or in rocket motors is converted into mechanical energy at very high efficiencies. The large remainder of the heat available from the fuel is exhausted from the ram jet motors at extremely high temperatures, which if not utilized, as in the case of aircraft using such motors, makes this type of motor quite inefficient on an overall basis.

The unitary power generator embodied in the present invention provides for the production of increased amounts of usable power by compounding the power obtained at very high efficiencies from the ram jet motors, with the power obtained from the use of the exhaust heat at approximately the 34% overall efficiency found in conventional high grade steam-electric generating plants. Thus, the more power that may be developed from the ram jet motors at high efficiencies, with respect to the amount of the power obtained from the balance of the heat in the exhaust gases, the greater the total output of usable power that may be obtained from the compounding of the power outputs thereof, and the smaller and cheaper the entire installation will be for a specific power rating.

The engine provided herein has no internal gears, nor off-centered rotors, nor reciprocating pistons, nor crankshaft. It burns petrol amid ample air and at a comparatively low temperature, and consequently its exhausts contain extremely small amounts of CO, $NO_x$, and other pollutants. It could also burn hydrogen, hydrogen peroxide, or other fuels. It may be built small enough to run a lawn mower, motorcycle, small fishing boat, or home generator, or large enough to power an airplane, a helicopter, or a rural power plant.

Claims:

1. A rotary prime mover (10) having a generally cylindrical casing (20), the casing including an axial air intake (27) and an axial exhaust outlet (30), e.g., upper and lower identical portions (21), each provided with at least two air inlet ports (27) covered by air filter means (29), and at least two exhaust outlets (34), each connected to an associated exhaust pipe (30), the exhaust pipes preferably being connected to an exhaust manifold (31), the casing also preferably including an outer housing (21) and an inner heat-insulating casing (32), and frusto-conical air inlets (33) leading from the air inlet ports (27) to the inlet side (39) of the casing (20), and exhaust outlet ports (34) leading from the exhaust side (40) of the of the casing 20 to said exhaust outlets (30), a space being preferably provided between the outer housing (20) and the inner casing (32), thereby to maintain sound output levels to a minimum and to reduce transfer of heat between the inner casing and the outer housing, and preferably including insulating material disposed between the outer housing (21) and the inner casing (32), thereby further reducing transfer of heat and sound, and bearing means (26) at each circular end of the casing (20) to support a longitudinally arranged shaft (51), the casing preferably including means (37) protecting the bearings (26) from the heat of the exhaust, the longitudinally arranged shaft, e.g., being solid and being concentrically bored (60) to accommodate a fuel passage, or being hollow and being provided with a fuel inlet passage; a flywheel block (50) including at least two balanced, diametrically-opposed jet reaction engines (100) mounted therein at the circumferential edge thereof, each jet reaction engine including an air inlet mouth (105), a combustion chamber (108), a fuel infeed line (58) connected to the fuel inlet passage (60), ignition means (110) for igniting fuel fed to the combustion chamber (108), and an exhaust outlet (117), the ignition means preferably including a glow plug (110) or a spark plug connected by a whisker wiper electrode (70) to an electrical contact wiper (41) on the inner circumference of the casing (20); whereby operation of the jet reaction engines causes powered rotation of the flywheel block, so that power may be taken off the shaft. characterized in that: (A) the combustion chamber (108) has a cylindrical zone (108) communicating with an annual zone (115); (B) the fuel passage includes automatically-activated valve means (80, 81) therein; and (C) the ignition means (110) is operatively connected to a source of ignition power through the casing (20).

2. The rotary prime mover of claim 1 further characterized in that the automatically-activated valve means comprises a spring (81)-biased ball valve (80).

3. The rotary prime mover of claim 1 <u>further characterized in that</u> the flywheel block (50) includes a fuel inlet bore (58, 59), the bore (58, 59) containing a valve means therein (80, 81), the valve means (80, 81) comprising a spherical ball (80) maintained in position by a compression biasing spring (81).

4. The rotary prime mover of claim 1 <u>further characterized in that</u> it includes fan means (38) to draw air into said casing and to expel exhaust gas from said casing.

5. The rotary prime mover of claim 1 <u>further characterized in that</u> it includes air flow guide means along the inner circumferential wall (32) intermediate said air intake (39) and said exhaust outlet (40), the air inflow guide means preferably being generally in the shape of a fluted spiral groove, which is adapted to cooperate with the jet reaction engines to direct air to the air inlet mouth and to direct exhaust from the exhaust outlet to the baffled axial exhaust outlet.

6. The rotary prime mover of claim 1 <u>further characterized in that</u> it includes air compressor fan means secured to said shaft for compressing air and for directing said air to said air flow guide means.

7. The rotary prime mover of claim 1 <u>further characterized in that</u> the fuel inlet includes a fuel passage (60) in said longitudinal shaft, and at least two fuel passages (58) radially extending from said central shaft to an associated well (52) within which an associated jet reaction engine is secured, said wells (52) each having an axis parallel to the axis of said longitudinal shaft, the fuel inlet passage (58) preferably including a small diameter bore (58) leading to a larger diameter bore (59) adjacent the jet reaction engine well (52), said larger diameter bore (59) containing a ball valve means (80) and a valve control compression spring (81).

8. The rotary prime mover of claim 1 <u>further characterized in that</u> the jet reaction engine well (52) includes a circumferential abutment ledge (56) to retain the forward input end of the jet reaction engine (100).

9. The rotary prime mover of claim 1 <u>further characterized in that</u> the electrical contact wiper comprises a slip ring (41) within said casing, preferably wherein said slip ring is water cooled.

10. The rotary prime mover of claim 1 <u>further characterized in that</u> the jet reaction engine (100) includes a tubular body (103), an ignition head (106) adjustably secured at one end (105), said ignition head (106) including a plurality of longitudinally extending air inlet passages (107), an exhaust liner (113) adjustably secured at the other end (111), the exhaust liner (113) including a central longitudinally extending exhaust passage (117), a cylindrical combustion zone (108), an annular infeed zone (115), and means (116) for admitting fuel to said annular zone.

11. The rotary prime mover of claim 10 <u>further characterized in</u> <u>that</u> it includes a disc-shaped reed valve at said air inlet passages (107) to control the amount of air fed to said combustion zone.

12. The rotary prime mover of claim 10 <u>further characterized in</u> <u>that</u> it includes a hemi-toroidal base (115a) at said annular zone (115) to assist in the desired infeed of fuel thereinto.

13. The rotary prime mover of claim 10 <u>further characterized in</u> <u>that</u> the jet reaction tubular body (103) includes a plurality of longitudinally extending air cooling passages (101) therethrough.

0050698

FIG. 4

FIG. 1

FIG. 2

FIG. 3

0050698

0050698

European Patent Office

EUROPEAN SEARCH REPORT

Application number

EP 80 85 0198

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| XD | US - A - 3 541 787 (ROMOLI) <br> * Whole document * <br> -- | 1,4-6 | F 02 C 5/04 |
| XD | US - A - 3 085 399 (KITCHENS) <br> * Whole document * <br> -- | 1,3,7 | |
| X | GB - A - 1 334 744 (IGNELZI) <br> * Whole document * <br> -- | 1-4,6, 7 | |
| X | US - A - 3 712 060 (SORRENTI) <br> * Column 3, line 8 - column 6, line 35 * <br> -- | 1-4,6, 7 | TECHNICAL FIELDS SEARCHED (Int.Cl. 3) <br><br> F 02 C <br> F 02 K <br> F 23 R |
| | DE - A - 1 816 551 (FRANZMANN) <br> * Whole document * <br> -- | 1,4,6 | |
| | US - A - 2 599 209 (TENNEY) <br> * Whole document * <br> -- | 1,11 | |
| A | US - A - 4 229 938 (GALLAGHER) | | CATEGORY OF CITED DOCUMENTS |
| A | US - A - 3 804 549 (KELLENBARGER) | | X: particularly relevant if taken alone |
| A | US - A - 3 699 771 (CHELMINSKI) | | Y: particularly relevant if combined with another document of the same category |
| A | GB - A - 366 450 (HOWARD) | | A: technological background <br> O: non-written disclosure <br> P: intermediate document <br> T: theory or principle underlying the invention |
| A | GB - A - 275 677 (SERRELL) | | E: earlier patent document, but published on, or after the filing date |
| A | US - A - 2 499 863 (HART) <br> ---- | | D: document cited in the application <br> L: document cited for other reasons <br><br> &: member of the same patent family, corresponding document |

The present search report has been drawn up for all claims

| Place of search | Date of completion of the search | Examiner |
|---|---|---|
| The Hague | 27-01-1982 | IVERUS |

EPO Form 1503.1 06.78